# EUROPÄISCHE PATENTSCHRIFT

(11) **EP 4 187 903 B1**
(45) Veröffentlichungstag und Bekanntmachung des Hinweises auf die Patenterteilung: **20.08.2025**
(21) Anmeldenummer: 22206087.3
(22) Anmeldetag: 08.11.2022
(51) Int. Cl.: H04N 17/02, H04N 23/90

(54) **VORRICHTUNG UND VERFAHREN ZUR SYNCHRONISIERUNG MEHRERER OPTISCHER SENSOREN**
APPARATUS AND METHOD FOR SYNCHRONIZING MULTIPLE OPTICAL SENSORS
APPAREIL ET PROCÉDÉ DE SYNCHRONISATION DE MULTIPLES CAPTEURS OPTIQUES

(30) Priorität: 26.11.2021 DE 102021213323
(43) Veröffentlichungstag der Anmeldung: 31.05.2023
(73) Patentinhaber: Robert Bosch GmbH, 70442 Stuttgart (DE)
(72) Erfinder: Knorr, Moritz Michael, 31139 Hildesheim (DE); Lauer, Paul-Sebastian, 30175 Hannover (DE)

(56) Entgegenhaltungen:
- DE-A1- 102017 004 859
- DE-A1- 102020 207 455
- XING CHEN: "Capturing fast motion with consumer grade unsynchronized rolling-shutter cameras", 1 January 2012 (2012-01-01), XP055209934, Retrieved from the Internet <URL:http://hdl.handle.net/2429/43538>

## Beschreibung

### Stand der Technik

Die vorliegende Erfindung betrifft eine Vorrichtung sowie ein Verfahren zur Synchronisation mehrerer optischer Sensoren. Insbesondere betrifft die vorliegende Erfindung eine Verwendung eines verbesserten Kalibriertargets (Normkörper).

Die Überwachung von Gebäuden, Grundstücken und Fertigungsprozessen baut ebenso wie die derzeit schnell voranschreitende Entwicklung der Automatisierung des Personenindividualverkehrs auf optische Sensoren (Kameras). Die ermittelten Objekte sollen hinsichtlich ihrer Aufenthaltsorte exakt lokalisiert werden können, wobei auch der Zeitpunkt, zu welchem die Objekte an dem jeweiligen Ort verweilen, exakt bekannt sein muss.

Bei der Kalibrierung von Kameras werden üblicherweise Kalibriertafeln mit regelmäßigen, im Bild leicht zu detektierenden Mustern (z.B. Schachbrettstrukturen) verwendet.

Bei der Kalibrierung von Multikamerasystemen müssen die Kameras miteinander synchronisiert werden. Dies kann z.B. per PTP (Precision Time Protocol) - einem Netzwerkprotokoll zur Synchronisierung der Zeiten in den Kameras- oder mittels einer Synchronisierungsleitung zwischen den Kameras (dabei dient eine Kamera als Master und gibt den Aufnahmezeitpunkt vor und die anderen Kameras reagieren auf das Triggersignal auf der Leitung) realisiert werden.

Lassen sich die Kameras nicht synchronisieren, muss sichergestellt werden, dass die Messanordnung starr ist, bis alle Kameras ein Bild aufgezeichnet haben.

Der vorgenannte Stand der Technik ist in der Praxis sehr fehleranfällig. Fehlerhafte Kameraeinstellungen, Probleme im Aufnahmenetzwerk (z.B. aufgrund starker Auslastung des Aufnahmesystems) oder defekte Synchronisierungsleitungen verhindern die zeitgleiche Aufnahme der Kalibriertafel. Bei unsynchronisierten Systemen führen Bewegung von Kalibriermuster oder einzelnen Sensoren zur Verletzung der Annahme einer starren Anordnung. Ist weder die eine noch die andere Bedingung erfüllt, führt dies wiederum zu einer fehlerhaften Schätzung der Kalibrierparameter.

Der Anwender kann jedoch nicht oder nur mit großem Aufwand erkennen, dass ein Fehler aufgetreten ist.

Idealerweise würde der Anwender bereits im Bildpaar erkennen können, dass während der Aufnahme ein Fehler aufgetreten ist. Darüber hinaus wären durch Bestimmung des Zeitversatzes ggfs. auch Rückschlüsse auf die Fehlerquelle möglich.

Es ist eine Aufgabe der vorliegenden Erfindung, die vorgenannten Nachteile des Standes der Technik zu lindern und insbesondere eine vereinfachte und daher kostengünstigere Anordnung zur Kalibrierung von Kamerasystemen vorzustellen. Das Dokument Xing Chen: "Capturing fast motion with consumer grade unsynchronized rolling-shutter cameras", 1. Januar 2012 offenbart ein Verfahren zum Erfassen schneller Bewegung mittels nicht-synchronisierter Rolling-Shutter Kameras.

Das Dokument DE 10 2017 004 859 A1 offenbart ein Verfahren zum Kalibrieren einer Projektionsgeometrie eines Head-Up Displays.

Das Dokument DE 10 2020 207 455 A1 offenbart ein Verfahren zur Bestimmung zumindest eines Objekts eines Umfelds einer Plattform.

### Offenbarung der Erfindung

Die vorgenannte Aufgabe wird erfindungsgemäß durch die unabhängigen Ansprüche definiert.

Die Unteransprüche zeigen bevorzugte Weiterbildungen der Erfindung.

Verbessert wird der optische Kontrast bzw. die Möglichkeit, die optischen Erscheinungen des Kalibriertargets über der Zeit zu modifizieren, indem eine Aussendung von Licht in einem Bereich an einer zweiten Position (welche nicht mit der ersten Position zusammenfällt, sondern insbesondere benachbart zur ersten Position ist) zum zweiten Zeitpunkt erfolgt. Insbesondere kann hierbei dasjenige Licht bzw. diejenige Erscheinung, welche zuvor an der ersten Position stattgefunden hat, zum zweiten Zeitpunkt an der zweiten Position (und insbesondere nicht mehr an der ersten Position) erfolgen. Zudem wird vorgeschlagen, dass die Aussendung von Licht beispielsweise durch eine jeweilige LED oder LED-Anordnung im Bereich der ersten Position bzw. im Bereich der zweiten Position stattfindet. Dies kann insbesondere dergestalt erfolgen, dass die Positionen einen Abstand zueinander aufweisen, welcher größer als die Durchmesser der verwendeten Leuchtmittel ist. Auf diese Weise ist derjenige Bereich, welcher der ersten bzw. der zweiten Position zugeordnet ist, deutlich größer als die räumliche Erstreckung des Lichtsignals des jeweiligen Leuchtmittels. Auf diese Weise können die Positionen bestens voneinander unterschieden werden, so dass die erfindungsgemäß ausgestalteten Kalibriertargets auch auf weitere Entfernung hin für die Kalibrierung und Synchronisierung von optischen Sensoren verwendet werden können.

Je nach Zeitfolge der Lichtereignisse auf dem Kalibriertarget und der Belichtungszeit der verwendeten optischen Sensoren können die auf einem jeweiligen Bild (engl. Frame) der Sensorbilder leuchtenden Positionen auf dem Kalibriertarget gezählt werden. Mit anderen Worten ist während eines Frames das Leuchtsignal von der ersten Position zur zweiten Position (ggf. auch weiter) gewandert und hat jeweilige optische Eindrücke an den Positionen hinterlassen. Die Anzahl der Positionen kann in Kenntnis der jeweiligen Leuchtereignisdauer dazu verwendet werden, die Belichtungszeit des verwendeten Sensors zu ermitteln. Anders ausgedrückt kann die Anzahl der vordefinierten, leuchtenden Positionen im Frame multipliziert mit der jeweiligen Leuchtdauer eines einzelnen Leuchtmittels multipliziert als Indikator für die Belichtungsdauer zum Aufnahmezeitpunkt des jeweiligen Frames verwendet werden. Mithilfe dieser Information kann die Belichtungsdauer der verwendeten Sensoren auf diese Weise angepasst werden, um die Bilderfassung einander identisch vornehmen zu können.

Im Zuge der Kalibrierung einer Vielzahl verwendeter Sensoren kann eine zusätzliche Arbeitserleichterung für die Anwender bzw. Rationalisierung des Prozesses wie folgt aussehen: Zunächst wird ein Signal von einem den Sensoren zugeordneten System empfangen. Beispielsweise kann eine Masterkamera als optischer Sensor im Cluster verwendet werden und die Kamera einen Aufnahmezeitpunkt ermitteln und im Ansprechen darauf das Signal (z.B. kennzeichnend den Aufnahmezeitpunkt) aussenden. Im Ansprechen auf den Empfang des Signals kann die optische Erscheinung des Kalibriertargets für sämtliche Sensoren wie oben beschrieben modifiziert werden. Nun kann erneut geprüft werden, ob sämtliche Kameras dieselbe optische Erscheinung des Kalibriertargets auch zu einem darauf folgenden Zeitpunkt erfasst haben. Nach der erfolgten Kalibrierung bzw. den erfolgten Aufnahmen kann eine Korrektur der Positionen, Ausrichtungen oder des zeitlichen Verhaltens der Sensoren automatisch oder manuell vorgenommen werden.

Derjenige Sensor des Systems, welcher die Steuerung der übrigen Sensoren übernimmt, kann beispielsweise auch über eine Sendeeinheit (drahtlos oder drahtgebunden) verfügen, über welche das Signal ausgesandt wird. Das von diesem Sensor ausgesandte Signal kann anschließend von den anderen Sensoren empfangen werden, um ihrerseits einen Erfassungsvorgang anzustoßen. Auf diese Weise kann eine komfortable und organisatorisch besonders einfache Kalibrierung mehrerer Sensoren erfolgen.

Gemäß einem zweiten Aspekt der vorliegenden Erfindung wird eine Vorrichtung zur Synchronisierung mehrerer optischer Sensoren im Zuge einer Kalibrierung der Sensoren vorgeschlagen. Die Vorrichtung umfasst ein Kalibriertarget mit einer Vielzahl Leuchtmittel, wobei jedes Leuchtmittel in einem Bereich an einer jeweiligen vordefinierten Position, angeordnet ist. Insbesondere sind pro Position ein ansteuerbares Leuchtmittel bzw. eine gemeinsam ansteuerbare Vielzahl einzelner Leuchtmittel (z.B. LEDs o.ä.) angeordnet. Die Leuchtmittel sind insbesondere in das Kalibriertarget integriert, so dass eine vordefinierte relative Position der Leuchtmittel bezüglich des Kalibriertargets und insbesondere auch der Leuchtmittel zueinander stets gegeben ist. Zusätzlich ist eine Steuereinheit in der Vorrichtung vorgesehen, wobei die Steuereinheit eingerichtet ist, eine optische Erscheinung des Kalibriertargets für die Sensoren zu einem zweiten Zeitpunkt gegenüber einem ersten und früheren Zeitpunkt zu modifizieren. Mit anderen Worten kann die Steuereinheit die Leuchtmittel ansteuern, um die Leuchtmittel ein- und auszuschalten, wie es in Verbindung mit dem oben genannten erfindungsgemäßen Verfahren im Detail beschrieben worden ist.

Einschalten eines ersten Leuchtmittels in einem Bereich an der ersten Position vor oder zu einem ersten Zeitpunkt und das Ausschalten des Leuchtmittels an der ersten Position auf dem Kalibriertarget vor oder zum zweiten Zeitpunkt. Insbesondere kann auch vor oder zu einem zweiten Zeitpunkt ein zweites Leuchtmittel an einer zweiten Position auf dem Kalibriertarget eingeschaltet werden, so dass sich eine Art Lauflicht-Effekt ergibt. Somit ergeben sich die Merkmale, Merkmalskombinationen und Vorteile der erfindungsgemäßen Vorrichtung derart ersichtlich in entsprechender Weise zum erfindungsgemäßen Verfahren, so dass zur Vermeidung von Wiederholungen auf die obigen Ausführungen verwiesen wird.

Bevorzugt können die vordefinierten Positionen auf dem Kalibriertarget paarweise äquidistant angeordnet sein. Mit anderen Worten ist eine Linie, insbesondere eine Gerade vorgesehen, auf welcher die vordefinierten Positionen äquidistant, also mit gleichen Abständen zueinander versehen, angeordnet sind. Dies schließt nicht aus, dass die vordefinierten Positionen rasterartig bzw. matrixartig angeordnet sind, so dass ein jedes Leuchtmittel insbesondere vier nächstliegend benachbarte Leuchtmittel im Umfeld aufweist, wenn man von Randbereichen des Rasters absieht. Auf diese Weise ergibt sich eine zweidimensionale Anordnung der Leuchtmittelpositionen zueinander, was die Verwendbarkeit des Kalibriertargets und der erfindungsgemäßen Vorrichtung auf größere Entfernungen bestmöglich flexibel gestaltet.

Der Bereich, welcher an der ersten Position dem ersten Leuchtmittel zugeordnet ist (also z.B. ein Feld in einem schachbrettartigen Kalibriertarget) kann insbesondere einen Durchmesser aufweisen, welcher in Richtung eines nächstgelegenen zweiten Bereiches bzw. eines nächstgelegenen zweiten Leuchtmittels orientiert ist, welcher kleiner als ein Abstand der Bereiche zueinander bemessen ist. Mit anderen Worten ist der Abstand der schachbrettartigen Felder zueinander kleiner als ihr jeweiliger Durchmesser. Ist der Abstand der Bereiche zueinander 0, ergibt sich im Falle einer Schwarz-Weiß-Rasterung die Erscheinung eines herkömmlichen Schachbrettes. Hierbei kann die Licht aussendende Fläche innerhalb des Bereiches (z.B. die abstrahlende Fläche einer LED) deutlich gegenüber den Abmaßen des ihm zugeordneten Bereiches sein. Insbesondere kann das Leuchtmittel (die LED) zentral in einem jeweiligen Feld des Schachbretts angeordnet sein.

Alternativ können die Bereiche auch am Rand (außerhalb) des eigentlichen Schachbrettfeldes eines Kalibrierkörpers angeordnet sein. Mit noch anderen Worten säumen die vordefinierten Positionen den Hoch-Kontrast-Bereich (abwechselnd schwarz-weiße Rechtecke, Dreiecke, Hexagone, o.ä.) des Kalibriertargets bzw. das rasterartige Muster im Falle eines Schachbrettes. Insbesondere können mehrere, bevorzugt mindestens zwei oder drei, insbesondere bevorzugt vier Kanten des Kalibriertargets durch jeweils mehrere vordefinierte Positionen und Leuchtmittel gesäumt sein.

Insbesondere bevorzugt wird ein in Hardware ausgestaltetes Kalibriertarget verwendet, welches Bohrungen aufweist, innerhalb welcher das jeweilige Leuchtmittel an einer jeweiligen vordefinierten Position eingelassen ist. Mit noch anderen Worten ist das Kalibriertarget keine Erscheinung auf einem beliebig ansteuerbaren Bildschirm, so dass sich ein bestmöglicher Kontrast zwischen hellen und dunklen Bereichen des Schachbrettes einstellt. Insbesondere können hierbei die dunklen Felder eine Beschichtung bzw. optische Beschaffenheit aufweisen, welche Licht bestmöglich absorbiert und eine tief schwarze Erscheinung garantiert.

Insbesondere ist für lineare oder rasterförmige Anordnungen / Muster innerhalb des Kalibriertargets vorgesehen, dass genau ein ansteuerbares Leuchtmittel pro vordefinierter Bereich vorgesehen ist, wobei nicht jedes Rasterfeld ein Leuchtmittel aufweisen muss. Mit noch anderen Worten können einzelne Bereiche in der regelmäßigen Erscheinung des Kalibriertargets ohne Leuchtmittel ausgestaltet sein, so dass die Anzahl der Leuchtmittel hinter der Anzahl der Felder in der linienartigen oder rasterartigen Erscheinung des Kalibriertargets zurückbleibt.

Bevorzugt können die aufeinander folgenden Zeitpunkte, zu welchen die jeweilige Schaltvorgänge die Aussendung von Licht in einem Bereich einer der vordefinierten Positionen bewirken, dynamisch verändert werden. Beispielsweise kann eine Art Frequenz-Sweep erzeugt werden, indem das Intervall, in welchem die vorhandenen Leuchtmittel nacheinander ein- und ausgeschaltet werden, laufend verkürzt wird, bis ein Zyklus (ein Durchgang oder mehrere Durchgänge über die vorhandenen Leuchtmittel) beendet ist. Mittels einer ansteigenden Frequenzbasis bezüglich der Identifikation einer Belichtungsdauer bzw. des zeitlichen Versatzes zwischen den Aufnahmezeitpunkten zweier Sensoren erhöht werden.

Insbesondere können erste und zweite Positionen für erste und zweite Lichtsignale auch redundant auf ein und demselben Kalibriertarget vorgesehen sein. Insbesondere können diese an einander gegenüberliegenden Rändern des Kalibriertargets angeordnet sein, um eine redundante Darstellung insbesondere für solche Situationen bereitzustellen, in welchen ein erster Sensor nur einen ersten Teil des Kalibriertargets und ein zweiter Sensor nur einen zweiten Teil des Kalibriertargets optisch erfasst. Somit können die beiden Sensoren, obwohl sie einander nicht überschneidende Bereiche des Kalibriertargets oder zumindest nur anteilig einander überschneidende Bereiche des Kalibriertargets ablichten, jeweils dieselbe Zeit-Information bzw. Licht-Information erfassen.

Zusätzlich kann es vorteilhaft sein, wenn die vorgesehenen Positionen lediglich einmal durchlaufen werden. Auf diese Weise können Mehrdeutigkeiten in den Repräsentationen der Kalibriertargets, welche durch die Sensoren erstellt worden sind, vermieden werden. Insbesondere kann ein Auslösesignal (Englisch "trigger") vorgesehen sein, im Ansprechen auf dessen Empfang das Kalibriertarget die Aussendung von Licht und den Wechsel des Licht aussendenden Bereiches über der Zeit startet. Dieses Auslösesignal kann drahtlos oder drahtgebunden, insbesondere von einem Master-Sensor zum Kalibriertarget, gesendet werden.

Nachfolgend werden Aspekte der Erfindung ohne einschränkenden Charakter mit anderen Worten ausgeführt, welche das Verständnis der Erfindung und bevorzugte Ausgestaltungen von Merkmalen und Gegenständen derselben verdeutlichen:
Diese Erfindung beschreibt die Erweiterung herkömmlicher Kalibriereinheiten mit zeitlich veränderlichen Elementen, um eine Synchronisierung zwischen Kalibriereinheit und durch die Sensorik aufgezeichneten Kalibrierdaten zu ermöglichen. Das Prinzip wird am Beispiel von Multikamerasystemen beschrieben, lässt sich aber auf weitere Sensorarten, z.B. Lidarsensoren erweitern.

Bei der Kalibrierung einer Kamera werden intrinsische (fokale Länge, Bildhauptpunkt, Verzeichnungen, ...) und extrinsische (relative Pose der Kamera im 3D Raum) Parameter geschätzt, um den Abbildungsfehler des optischen Systems zu bestimmen und die Orientierung der Kamera in der Welt bestimmen zu können.

Für die Kalibrierung von Kamerasystemen bestehend aus einer oder mehreren Kameras werden dabei üblicherweise Kalibriereinheiten in Form von einer oder mehreren Kalibriertafeln genutzt. Während des Kalibriervorgangs werden aus unterschiedlichen Perspektiven Aufnahmen der Kalibriertafeln erstellt. Aus den dabei entstehenden Bildern werden markante Bildpunkte ermittelt, woraus mittels einer Ausgleichsrechnung die unbekannten Kameraparameter für innere und äußere Orientierung bestimmt werden.

Um z.B. zwei Kameras zueinander kalibrieren zu können, muss dabei sichergestellt werden, dass die Bildaufnahme zeitgleich geschieht, sobald das bewegte Kalibriermuster in beiden Kameras gleichzeitig sichtbar ist. Bei nicht synchroner Aufnahme müsste sichergestellt sein, dass die gesamte Messanordnung starr ist.

In der Praxis gibt es eine Reihe möglicher Störeinflüsse, die dazu führen können, dass die notwendige Bedingung einer zeitgleichen Aufnahme bzw. einer starren Messanordnung nicht erfüllt wird. Das führt im Folgenden zu einer fehlerbehafteten Schätzung der Kalibrierparameter und ist in den Aufnahmen oft nicht zu erkennen.

In der Erfindung wird daher vorgeschlagen, auf der Kalibriertafel zusätzliche im Bild sichtbare Elemente (z.B. LED-Leuchtstreifen mit regelmäßigem Blinkmuster) anzubringen, um in den Kamerabildpaaren einen ungewollten zeitlichen Aufnahmeversatz erkennen zu können.

Unterschiedliche Umsetzungen und Erweiterungen sind für das vorgeschlagene Verfahren denkbar. Diese werden im Folgenden kurz vorgestellt.

Es konnten beispielsweise auf der Kalibriertafel ein oder mehrere LED-Leuchtstreifen angebracht werden. Deren LEDs würden durch einen Mikrocontroller angesteuert und dann nacheinander mit einer auf die Kameraaufnahmefrequenz abgestimmten Frequenz einzeln eingeschaltet werden. Im Bild sieht es dann aufgrund der Trägheit während der Bildaufnahme aus, als würde ein Teil der LEDs zum gleichen Zeitpunkt leuchten. Vergleicht man nun die zueinander gehörigen Aufnahmen, lasst sich in den Bildern schnell erkennen, ob die gleichen LEDs geleuchtet haben oder nicht. Somit lasst sich zuverlässig und mit geringem Aufwand bestimmen, ob die Aufnahmen zeitgleich stattgefunden haben.

Statt einer LED-Leiste konnte man aber auch einen Blitz, der von allen Kameras gesehen wird, anbringen. Auch dieser müsste in vermeintlich zeitgleich stattgefundenen Aufnahmen sichtbar sein.

Durch Einbau eines Funkmodules zum Triggern der LEDs ließe sich der Versatz zwischen Einschalten der LED und Erkennung im Bild messen. Damit ließe sich die Latenz des Aufnahmesystems bestimmen.

Wenn ein Funkmodul im Kalibriermuster eingebaut ist, könnte auch die Aufnahme der Messdaten direkt vom Kalibriermuster aus getriggert werden (ggfs. sogar automatisch). Bei unbewegter Messanordnung wäre damit auch bei ansonsten nicht weiter zueinander synchronisierten Sensoren eine erfolgreiche Kalibrierung garantiert. Die Erkennung einer unbewegten Anordnung könnte dabei durch einen Benutzer oder automatisch durch eine (am Kalibrierkörper angebrachte) Sensoreinheit (bspw. inertiale Messeinheit) erfolgen.

### Kurze Beschreibung der Zeichnung(en)

Nachfolgend werden Ausführungsbeispiele unter Bezugnahme auf die begleitende Zeichnung im Detail beschrieben. Es zeigen:
- Figur 1: eine schematische Darstellung einer Anordnung aufweisend drei zu kalibrierende Sensoren, welche einen Kalibrierkörper erfassen;
- Figur 2: ein alternatives Beispiel, in welchem weitere Ausgestaltungen erfindungsgemäß verwendbarer Kalibrierkörper veranschaulicht sind;
- Figur 3: eine schematische Darstellung eines Beispiels einer erfindungsgemäßen Vorrichtung zur Synchronisierung mehrerer optischer Sensoren;
- Figur 4: ein erstes Beispiel einer Anordnung, welche ein Signallicht zum Veranlassen einer Bildaufnahme verwendet;
- Figur 5: ein Beispiel einer Vorrichtung, welche eine Bildaufnahme durch ein vom Kalibriertarget ausgesandtes Triggersignal veranlasst; und
- Figur 6: ein Flussdiagramm veranschaulichend Schritte eines ausgestalteten Verfahrens zur Synchronisierung mehrerer optischer Sensoren.

### Ausführungsformen der Erfindung

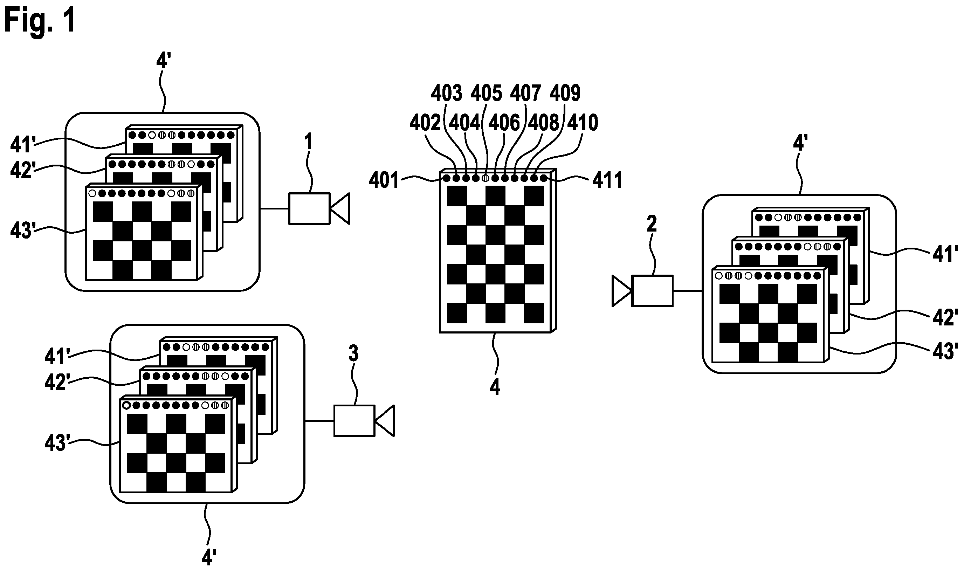

Figur 1 zeigt ein Kalibriertarget 4, welches im Erfassungsbereich dreier optischer Kameras als Sensoren 1, 2, 3 angeordnet ist. Eine obere Kante des Kalibriertargets 4 weist elf vordefinierte Positionen 401 bis 411 auf, welche ein jeweiliges Leuchtmittel in Form einer LED aufweisen. Diese LEDs können einzeln nacheinander zum Leuchten gebracht werden. In der aktuellen Darstellung ist lediglich die LED an der Position 405 (erste Position) aktiv, während die LEDs an den übrigen Positionen 401 bis 404, 406 bis 411 nicht betrieben werden. Die Sensoren 1, 2, 3 haben zu aufeinanderfolgenden Zeitpunkten (erster Zeitpunkt, zweiter Zeitpunkt, 3. Zeitpunkt) jeweilige Repräsentationen 41', 42', 43' des Kalibriertargets 4 aufgenommen. Diese Ablichtungen 4' des Kalibriertargets 4 ermöglichen nun die Überprüfung der Synchronität der Sensoren 1, 2, 3 sowie die Ermittlung der jeweiligen Belichtungszeit der Sensoren 1, 2, 3. Werden die optischen Repräsentationen 41', 42', 43' in aufsteigender Ordnungsfolge aufgenommen, ergibt sich, dass zum Zeitpunkt der Aufnahme der Repräsentation 41' eine synchrone Erfassung des Kalibriertargets vorlag und drei LEDs (nämlich diejenigen an den Positionen 403 bis 405) als leuchtend abgelichtet worden sind. Hieraus kann die Belichtungsdauer der Sensoren 1, 2, 3 zu dem Zeitpunkt der Aufnahme der Repräsentation 41' abgeleitet werden (dreimal die Leuchtdauer einer LED ergibt in erster Näherung die Belichtungszeit der Sensoren 1, 2, 3). Bereits zum Aufnahmezeitpunkt der optischen Repräsentation 42' "hinkt" der zweite Sensor 2 gegenüber den Sensoren 1, 3 etwas hinterher. Zum Zeitpunkt der Aufnahme der zweiten optischen Repräsentation 42' ist bereits die LED an der vordefinierten Position 410 aktiv, während diese in den optischen Repräsentationen 42' der Sensoren 1 und 3 noch nicht aktiv war. Entsprechend ist die LED an der vordefinierten Position 407 in der optischen Repräsentation 42' des Sensors 2 nicht mehr aktiv. Auch in der aktuellsten optischen Repräsentation 43' hinkt der Sensor 2 gegenüber den beiden übrigen Sensoren 1, 3 zeitlich hinterher, da die optische Repräsentation 43' des Sensors 2 noch die ersten vier Positionen 401 bis 404 als erleuchtet wiedergibt, während in den optischen Repräsentationen 43' der Sensoren 1, 3 die letzten drei vordefinierten Positionen 409 bis 411 sowie die erste Position 401 leuchten. Hieraus kann abgeleitet werden, dass der Sensor 2 nicht synchron zu den Sensoren 1, 3 arbeitet und gegebenenfalls überlastet ist bzw. einen Defekt aufweist.

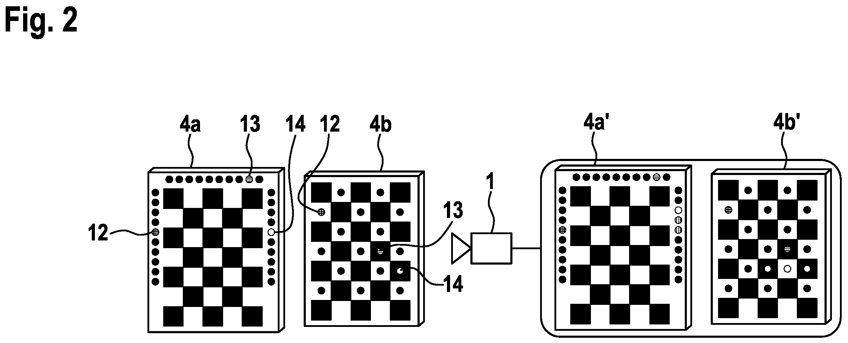

Figur 2 zeigt zwei weitere Beispiele für Kalibriertargets 4a, 4b, wobei das erste Kalibriertarget 4a vordefinierte Positionen entlang der beiden seitlichen Ränder sowie entlang des oberen Randes aufweist. Mit anderen Worten sind die vordefinierten Positionen um das Raster des Kalibrierkörpers herum angebracht. Im Unterschied hierzu sind in der rechten Ausführungsform des Kalibriertargets 4b die vordefinierten Positionen in das Raster des Kalibrierkörpers integriert, wodurch dieser kompakter ausgeführt werden kann. Beide Ausführungen zeigen jedoch den gleichen absoluten Zeitpunkt an. Durch die Positionen der jeweils leuchtenden LEDs wird hier eine Zeit in Sekunden (LED 12), Zehntelsekunden (LED 13) und Hundertstelsekunden (LED 14) angezeigt. Die durch den Sensor 1 erstellten optischen Repräsentationen 4a', 4b' geben ebenfalls identische Ergebnisse zum dargestellten Kalibriertarget 4a, 4b wieder. Die LEDs 12, 13 werden wie im Original dargestellt. Aufgrund der Belichtungszeit des Sensors 1 wird lediglich die Darstellung der LED 14 "verschmiert" dargestellt, da die Belichtungszeit etwa die dreifache Dauer der Leuchtdauer des die Hundertstelsekunden anzeigenden Leuchtmittels aufweist (drei hundertstel Sekunden Beleuchtungszeit in erster Näherung).

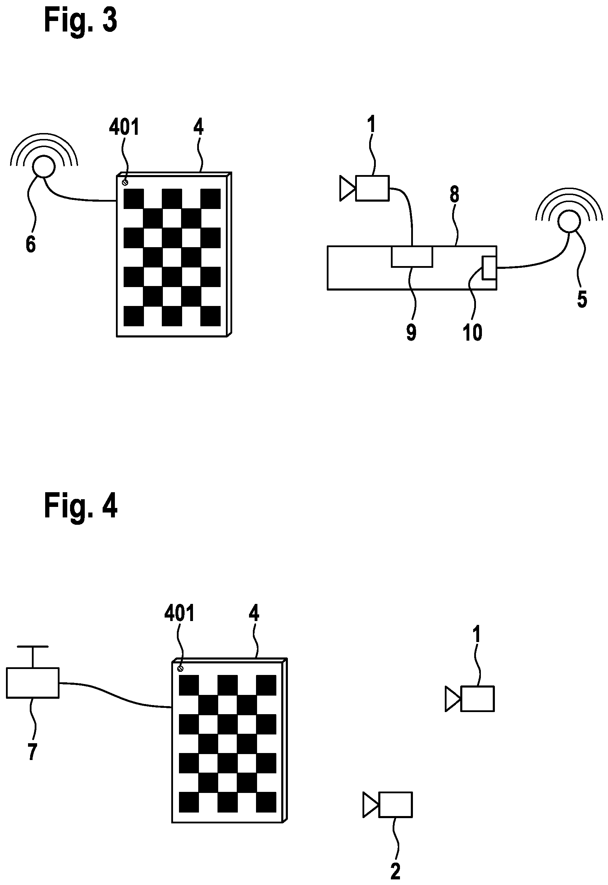

Figur 3 zeigt ein Ausführungsbeispiel einer erfindungsgemäßen Vorrichtung, in welcher ein Sensor 1 in Form einer Kamera mit einem Dateneingang 9 einer Verarbeitungseinrichtung 8 informationstechnisch verbunden ist. Über einen Datenausgang 10 ist die Vorrichtung imstande, einen Drahtlossender 5 zur Aussendung eines Triggersignals zu veranlassen. Hierzu wird das Drahtlossignal mittels eines Drahtlosempfängers 6 vom Kalibrierkörper 4 empfangen, im Ansprechen worauf das Leuchtmittel an der Position 401 zu leuchten beginnt. Im Ansprechen auf das Identifizieren des aktivierten Leuchtmittels an der Position 401 können (nicht dargestellte) weitere Sensoren die Bildaufnahme steuern und das in Verbindung mit den Figuren 1 und 2 beschriebene Verfahren ausführen.

Figur 4 zeigt ein erstes Ausführungsbeispiel einer erfindungsgemäßen Vorrichtung mit einem Taster 7, durch welchen ein Anwender die Aktivierung des Leuchtmittels an der vordefinierten Position 401 aktivieren kann. Um zu erreichen, dass die Sensoren 1, 2, die nicht gleichzeitig Bilder aufnehmen, die gleiche physische Szene betrachten, kann der Kalibrierkörper bei allen Aufnahmen, die für die Kalibrierung verwendet werden, statisch angeordnet sein. Ist der Kalibrierkörper 4 unbewegt, ist der genaue Bildaufnahmezeitpunkt unerheblich. Die Tatsache, dass der Kalibrierkörper 4 sich aktuell nicht bewegt, kann beispielsweise durch einen Nutzer durch Drücken des Tasters 7 signalisiert werden. Im Ansprechen hierauf könnte das an der Position 401 angeordnete Leuchtmittel aktiviert werden, welches den Sensoren 1, 2 den Start des erfindungsgemäßen Verfahrens (Bildaufnahme) signalisiert.

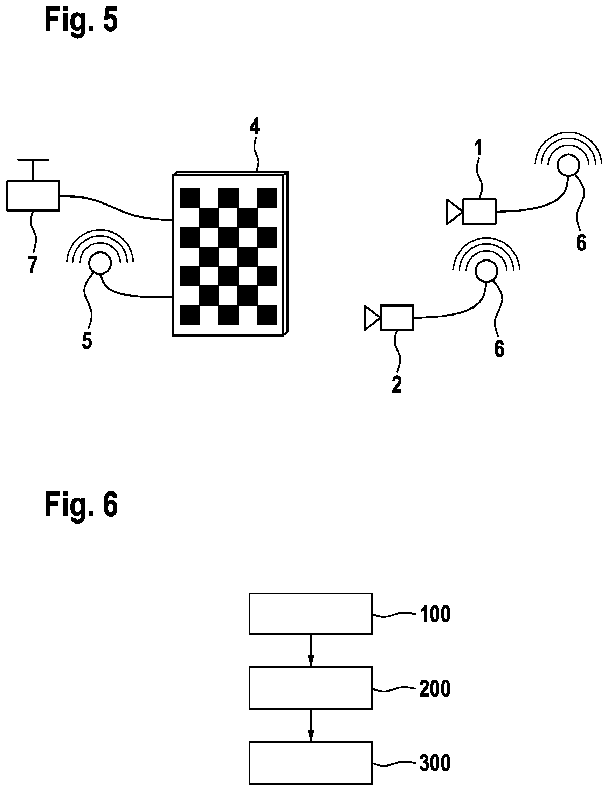

Figur 5 zeigt das in Figur 4 dargestellte Ausführungsbeispiel der vorliegenden Erfindung, welches durch einen Drahtlossender 5 und zwei Drahtlosempfänger 6 erweitert ist. Ist der Anwender der Auffassung, dass die Anordnung des Kalibriertargets 4 zur Aufnahme von Bildern mittels der Sensoren 1, 2 geeignet ist, drückt er den Taster 7, im Ansprechen worauf das Kalibriertarget 4 mittels des Drahtlossenders 5 ein Triggersignal an die Sensoren 1, 2 bzw. deren Drahtlosempfänger 6 sendet. Im Ansprechen auf den Empfang des Triggersignals starten die Sensoren 1, 2 die jeweilige Bildaufnahme.

Figur 6 zeigt Schritte eines Ausführungsbeispiels eines erfindungsgemäßen Verfahrens zur Synchronisierung mehrerer optischer Sensoren im Zuge einer Kalibrierung der Sensoren. Im Schritt 100 wird ein Kalibriertarget durch die Sensoren zu einem ersten Zeitpunkt optisch erfasst. Hierzu befindet sich das Kalibriertarget im Erfassungsbereich jeweils mindestens zweier zu kalibrierender Sensoren. In Schritt 200 wird eine optische Erscheinung des Kalibriertargets für die Sensoren optisch modifiziert, indem das Kalibriertarget zumindest an einer Position eine andere optische Erscheinung erhält, als zuvor. Beispielsweise kann ein Leuchtmittel, welches in oder auf dem Kalibriertarget vorgesehen ist, betrieben oder nicht mehr betrieben werden, um die optische Erscheinung zu modifizieren. In Schritt 300 wird das Kalibriertarget fortwährend durch die Sensoren erfasst. Da der Zeitpunkt des erneuten Erfassens nach dem ersten Zeitpunkt und nach der Modifikation der optischen Erscheinung liegt, kann anhand der Auswertung der Signale der Sensoren nicht nur die Lage des Sensors bezüglich des Kalibriertargets, sondern auch eine Erkenntnis bezüglich der Synchronität der optischen Sensoren erhalten werden.

Mittels der vorliegenden Erfindung lässt sich zuverlässig und mit geringem Aufwand durch Auswertung eines Bildpaares bestimmen, ob die Aufnahmen zur Kalibrierung mehrerer Sensoren zeitgleich stattgefunden haben. Ein ungewollter und sonst nur schwer feststellbarer zeitlicher Aufnahmeversatz lässt sich leicht erkennen.

## Patentansprüche

1. Verfahren zur Synchronisierung mehrerer optischer Sensoren (1, 2, 3) im Zuge einer Kalibrierung der Sensoren (1, 2, 3) umfassend die Schritte:
- Erfassen (100) eines Kalibriertargets (4) durch die Sensoren (1, 2, 3) zu einem ersten Zeitpunkt, zu welchem Licht in einem Bereich an einer ersten Position (405) einer Vielzahl vordefinierter Positionen (401-411) auf dem Kalibriertarget (4) ausgesendet wird,
- Empfangen eines Signals von einem einem der Sensoren (1, 2, 3) zugeordneten System und im Ansprechen darauf: Verändern einer Position und/oder Pose des Kalibriertargets (4),
- Modifizieren (200) einer optischen Erscheinung des Kalibriertargets (4) für die Sensoren (1, 2, 3),
- Erfassen (300) des Kalibriertargets (4) durch die Sensoren (1, 2, 3) zu einem zweiten, auf den ersten Zeitpunkt und die Modifikation folgenden Zeitpunkt, zu welchem das Licht in dem Bereich an der ersten Position (405) der Vielzahl vordefinierter Positionen (401-411) auf dem Kalibriertarget (4) nicht ausgesendet wird, und
- Feststellen, ob beim Erfassen (100, 300) des Kalibriertargets (4) zu dem ersten Zeitpunkt und dem zweiten Zeitpunkt durch die Sensoren (1, 2, 3) aufgenommene Informationen voneinander abweichen, um die Sensoren (1, 2, 3) zu synchronisieren.

2. Verfahren nach Anspruch 1 weiter umfassend
- eine Aussendung von Licht in einem Bereich an einer zweiten Position (406) der Vielzahl vordefinierter Positionen (401-411) auf dem Kalibriertarget (4) zum zweiten Zeitpunkt und
- eine Nicht-Aussendung von Licht in dem Bereich an der ersten Position (405) der Vielzahl vordefinierter Positionen (401-411) auf dem Kalibriertarget (4) zum zweiten Zeitpunkt.

3. Verfahren nach einem der vorstehenden Ansprüche weiter umfassend
- Zählen einer Anzahl vordefinierter Positionen (401-411) auf dem Kalibriertarget, welche zeitgleich Licht aussenden, in einem durch einen Sensor (1, 2, 3) aufgenommenen Bild (4') und unter Verwendung einer Kenntnis einer jeweiligen Dauer des Lichtaussendens
- Rückschließen auf eine Erfassungsdauer des Sensors (1, 2, 3).

4. Verfahren nach einem der vorstehenden Ansprüche weiter umfassend
- Ermitteln eines Versatzes eines jeweiligen Aufnahmezeitpunktes der Sensoren zueinander und insbesondere
- Korrigieren des Versatzes auf Basis während der Erfassung ermittelter Daten.

5. Vorrichtung zur Synchronisierung mehrerer optischer Sensoren (1, 2, 3) im Zuge einer Kalibrierung der Sensoren (1, 2, 3) umfassend:
- ein Kalibriertarget (4) mit einer Vielzahl Leuchtmittel jeweils in Bereichen an jeweiligen vordefinierten Positionen (401-411) auf dem Kalibriertarget (4) und
- einer Steuereinheit (8),
wobei die Steuereinheit (8) eingerichtet ist,
- eine optische Erscheinung des Kalibriertargets (4) für die Sensoren (1, 2, 3) und im Ansprechen auf ein von einem einem der Sensoren (1, 2, 3) zugeordneten System empfangenen Signal eine Position und/oder Pose des Kalibriertargets (4) zu einem zweiten Zeitpunkt gegenüber einem ersten und früheren Zeitpunkt zu modifizieren,
wobei
das Modifizieren der optischen Erscheinung
- eine Aussendung von Licht mittels eines ersten Leuchtmittels der Leuchtmittel in einem Bereich an einer ersten Position (405) auf dem Kalibriertarget (4) zum ersten Zeitpunkt und
- eine Nicht-Aussendung von Licht mittels des ersten Leuchtmittels in dem Bereich an der ersten Position (405) auf dem Kalibriertarget (405) zum zweiten Zeitpunkt
umfasst, und
die Steuereinheit (8) ferner eingerichtet ist, festzustellen, ob beim Erfassen (100, 300) des Kalibriertargets (4) zu dem ersten Zeitpunkt und dem zweiten Zeitpunkt durch die Sensoren (1, 2, 3) aufgenommene Informationen voneinander abweichen, um die Sensoren (1, 2, 3) zu synchronisieren.

6. Vorrichtung nach Anspruch 5, wobei die vordefinierten Positionen (401-411) auf dem Kalibriertarget paarweise äquidistant oder einem gleichmäßigen Raster entsprechend angeordnet sind.

7. Vorrichtung nach einem der vorstehenden Ansprüche 5 oder 6, wobei der Bereich an der ersten Position (405) einen Durchmesser in Richtung eines nächstgelegenen zweiten Bereiches an einer nächstgelegenen Position (406) der Vielzahl Positionen (401-411) aufweist, welcher kleiner als ein Abstand der Bereiche zueinander bemessen ist.

8. Vorrichtung nach einem der vorstehenden Ansprüche 5 bis 7, wobei das Kalibriertarget (4) ein schachbrettartig strukturiertes Muster aufweist und insbesondere ein jedes Feld des schachbrettartig strukturierten Musters eine oder keine der Vielzahl vordefinierter Bereiche und Positionen (401-411) aufweist.

9. Vorrichtung nach einem der vorstehenden Ansprüche 5 bis 8, welche eingerichtet ist, ein Verfahren nach einem der Ansprüche 1 bis 4 durchzuführen.

## Claims

1. Method for synchronizing a plurality of optical sensors (1, 2, 3) in the course of calibrating the sensors (1, 2, 3), comprising the steps of:
- capturing (100) a calibration target (4) by means of the sensors (1, 2, 3) at a first time at which light is emitted in a region at a first position (405) of a multiplicity of predefined positions (401-411) on the calibration target (4),
- receiving a signal from a system assigned to one of the sensors (1, 2, 3) and, in response thereto: changing a position and/or pose of the calibration target (4),
- modifying (200) an optical appearance of the calibration target (4) for the sensors (1, 2, 3),
- capturing (300) the calibration target (4) by means of the sensors (1, 2, 3) at a second time, following the first time and the modification, at which the light is not emitted in the region at the first position (405) of the multiplicity of predefined positions (401-411) on the calibration target (4), and
- determining whether information recorded by the sensors (1, 2, 3) when capturing (100, 300) the calibration target (4) at the first time and the second time differs in order to synchronize the sensors (1, 2, 3).

2. Method according to Claim 1, furthermore comprising
- an emission of light in a region at a second position (406) of the multiplicity of predefined positions (401-411) on the calibration target (4) at the second time, and
- a non-emission of light in the region at the first position (405) of the multiplicity of predefined positions (401-411) on the calibration target (4) at the second time.

3. Method according to one of the preceding claims, furthermore comprising
- counting a number of predefined positions (401-411) on the calibration target, which simultaneously emit light, in an image (4') recorded by a sensor (1, 2, 3) and using knowledge of a respective light emission duration,
- deducing a capture duration of the sensor (1, 2, 3).

4. Method according to one of the preceding claims, furthermore comprising
- ascertaining an offset of a respective recording time of the sensors with respect to one another and in particular
- correcting the offset on the basis of data ascertained during capture.

5. Apparatus for synchronizing a plurality of optical sensors (1, 2, 3) in the course of calibrating the sensors (1, 2, 3), comprising:
- a calibration target (4) having a multiplicity of light-emitting means in each case in regions at respective predefined positions (401-411) on the calibration target (4), and
- a control unit (8),
wherein the control unit (8) is configured
- to modify an optical appearance of the calibration target (4) for the sensors (1, 2, 3) and, in response to a signal received from a system assigned to one of the sensors (1, 2, 3), to modify a position and/or pose of the calibration target (4) at a second time with respect to a first and earlier time,
wherein
modifying the optical appearance comprises
- an emission of light by means of a first light-emitting means of the light-emitting means in a region at a first position (405) on the calibration target (4) at the first time, and
- a non-emission of light by means of the first light-emitting means in the region at the first position (405) on the calibration target (405) at the second time,
and
the control unit (8) is furthermore configured to determine whether information recorded by the sensors (1, 2, 3) when capturing (100, 300) the calibration target (4) at the first time and the second time differs in order to synchronize the sensors (1, 2, 3).

6. Apparatus according to Claim 5, wherein the predefined positions (401-411) on the calibration target are arranged in pairs equidistantly or in a manner corresponding to a uniform grid.

7. Apparatus according to either of the preceding Claims 5 and 6, wherein the region at the first position (405) has a diameter in the direction of a closest second region at a closest position (406) of the multiplicity of positions (401-411), which diameter is dimensioned to be smaller than a distance between the regions.

8. Apparatus according to one of the preceding Claims 5 to 7, wherein the calibration target (4) has a pattern structured like a chessboard and in particular each field of the pattern structured like a chessboard has one or none of the multiplicity of predefined regions and positions (401-411).

9. Apparatus according to one of the preceding Claims 5 to 8, which is configured to carry out a method according to one of Claims 1 to 4.

## Revendications

1. Procédé de synchronisation de plusieurs capteurs optiques (1, 2, 3) dans le cadre d'un étalonnage des capteurs (1, 2, 3), comprenant les étapes :
- détection (100) d'une cible d'étalonnage (4) par les capteurs (1, 2, 3) à un premier moment, auquel de la lumière est envoyée dans une zone sur une première position (405) d'une pluralité de positions (401-411) prédéfinies sur la cible d'étalonnage (4),
- réception d'un signal d'un système associé à un des capteurs (1, 2, 3) et en réponse à cela : modification d'une position et/ou d'une pose de la cible d'étalonnage (4),
- modification (200) d'une apparence optique de la cible d'étalonnage (4) pour les capteurs (1, 2, 3),
- détection (300) de la cible d'étalonnage (4) par les capteurs (1, 2, 3) à un deuxième moment suivant le premier moment et la modification, auquel la lumière n'est pas envoyée dans la zone sur la première position (405) de la pluralité de positions (401-411) prédéfinies sur la cible d'étalonnage (4), et
- constatation si, lors de la détection (100, 300) de la cible d'étalonnage (4) au premier moment et au deuxième moment, des informations enregistrées par les capteurs (1, 2, 3) divergent les unes des autres pour synchroniser les capteurs (1, 2, 3).

2. Procédé selon la revendication 1, comprenant par ailleurs
- un envoi de lumière dans une zone sur une deuxième position (406) de la pluralité de positions (401-411) prédéfinies sur la cible d'étalonnage (4) au deuxième moment et
- un non-envoi de lumière dans la zone sur la première position (405) de la pluralité de positions (401-411) prédéfinies sur la cible d'étalonnage (4) au deuxième moment.

3. Procédé selon l'une des revendications précédentes, comprenant par ailleurs
- décompte d'un nombre de positions (401-411) prédéfinies sur la cible d'étalonnage, lesquelles envoient simultanément de la lumière, sur une image (4') enregistrée par un capteur (1, 2, 3) et en utilisant une connaissance d'une durée respective de l'envoi de lumière
- déduction d'une durée de détection du capteur (1, 2, 3).

4. Procédé selon l'une des revendications précédentes, comprenant par ailleurs
- détermination d'un décalage d'un moment d'enregistrement respectif des capteurs les uns par rapport aux autres et en particulier
- correction du décalage sur la base de données déterminées pendant la détection.

5. Dispositif de synchronisation de plusieurs capteurs optiques (1, 2, 3) dans le cadre d'un étalonnage des capteurs (1, 2, 3), comprenant :
- une cible d'étalonnage (4) avec une pluralité de moyens d'éclairage respectivement dans des zones sur des positions (401-411) prédéfinies respectives sur la cible d'étalonnage (4), et
- une unité de commande (8),
l'unité de commande (8) étant mise au point
- pour modifier une apparence optique de la cible d'étalonnage (4) pour les capteurs (1, 2, 3) et, en réponse à un signal reçu par un système associé à un des capteurs (1, 2, 3), modifier une position et/ou une pose de la cible d'étalonnage (4) à un deuxième moment par rapport à un premier moment antérieur,
la modification de l'apparence optique comprenant
- un envoi de lumière au moyen d'un premier moyen d'éclairage des moyens d'éclairage dans une zone sur une première position (405) sur la cible d'étalonnage (4) au premier moment, et
- un non-envoi de lumière au moyen du premier moyen d'éclairage dans la zone sur la première position (405) sur la cible d'étalonnage (405) au deuxième moment
et
l'unité de commande (8) étant en outre mise au point pour constater si, lors de la détection (100, 300) de la cible d'étalonnage (4) au premier moment et au deuxième moment, des informations enregistrées par les capteurs (1, 2, 3) divergent les unes des autres pour synchroniser les capteurs (1, 2, 3).

6. Dispositif selon la revendication 5, les positions (401-411) prédéfinies étant disposées sur la cible d'étalonnage à équidistance par paires ou de manière correspondante en une trame régulière.

7. Dispositif selon l'une des revendications précédentes 5 ou 6, la zone sur la première position (405) présentant un diamètre en direction d'une deuxième zone la plus proche sur une position (406) la plus proche de la pluralité de positions (401-411), laquelle présente une dimension inférieure à une distance des zones les unes par rapport aux autres.

8. Dispositif selon l'une des revendications précédentes 5 à 7, la cible d'étalonnage (4) comportant un motif structuré façon damier et, en particulier, tout champ du motif structuré façon damier comportant une de la pluralité de zones et de positions prédéfinies (401-411) ou n'en comportant aucune.

9. Dispositif selon l'une des revendications précédentes 5 à 8, lequel est mis au point pour mettre en œuvre un procédé selon l'une des revendications 1 à 4.
